# EUROPEAN PATENT APPLICATION

(11) **EP 1 679 772 A2**
(43) Date of publication of application: **12.07.2006**
(21) Application number: 06250016.0
(22) Date of filing: 04.01.2006
(51) Int. Cl.: H01S 3/067, G02B 6/42

(54) **Apparatus for propagating optical radiation**

(30) Priority: 07.01.2005 GB 0500277
(71) Applicant: SPI Lasers UK Limited, 3 Wellington Park Tollbar Way Hedge End Southampton SO30 2QU (GB)
(72) Inventor: Hickey, Louise Mary Brendan, Hamble, Hampshire, SO31 4JQ (GB); Varnham, Malcolm Paul, Alresford, Hampshire SO24 9HF (GB); Zervas, Mikhail Nicholaos, Southampton, Hampshire SO15 5SR (GB)
(74) Representative: Jones, Graham Henry

(57) **Abstract**

Apparatus for propagating optical radiation in a first optical mode (1) having a first spatial mode shape (8), and a second optical mode (2) having a second spatial mode shape (9), which apparatus comprises an optical path (3), mode transforming means (5), and propagating means (6), wherein the mode transforming means (5) transforms at least a portion of the first optical mode (1) to the second optical mode (2), the propagating means (6) is configured such that in use at least some of the optical radiation propagates along the optical path (3) more than once, and the apparatus is characterised in that the first spatial mode shape (8) is different from the second spatial mode shape (9).

## Description

### Field of Invention

This invention relates to an apparatus for propagating optical radiation. The invention can take various forms, for example a passive cavity, a laser and a ring laser. The invention has application for sensing and communication systems.

### Background to the Invention

Fibre lasers can be configured as sensing elements. Examples are distributed feedback DFB fibre lasers which comprise a fibre Bragg grating written into a single mode optical fibre doped with a rare-earth dopant pumped by optical pump radiation. The laser emits light at a wavelength defined by the Bragg grating. The wavelength is modulated by a physical parameter such as acoustic pressure, and this modulation can be measured by analysing the light emitted by the laser using an interferometer coupled into a demodulator. Such a configuration is particularly attractive because it offers the possibility of concatenating many such gratings in a linear array, each grating emitting at a different wavelength. Such a grating can be individually interrogated using wavelength division multiplexing WDM technology to separate each wavelength channel individually, and thus the technology promises scalability into very large arrays of DFB gratings.

Unfortunately, work into the development of such arrays has been limited because the lasers interact with each other and this leads to temporal instability. To date, the largest known laser array has comprised only four to five sensors.

Although the above discussion has focussed on DFB fibre lasers, similar comments can be applied to distributed Bragg reflector (DBR) fibre lasers, or other fibre lasers. Concatenation of lasers leads to feedback between the lasers resulting in temporal instability.

There is therefore a requirement for an array of lasers that can be integrated together without resulting in temporal instability. This requirement exists in sensing, as well as other fields such as telecoms where a source that emits at many individual wavelengths is also desirable.

There is also a requirement for a laser that has increased immunity from external reflections and which does not require the use of an isolator. Such a laser has application in many fields including communications and sensing.

An aim of the present invention is to provide an apparatus for propagating optical radiation that reduces the above aforementioned problems.

### Summary of the Invention

According to a non-limiting embodiment of the present invention, there is provided apparatus for propagating optical radiation in a first optical mode having a first spatial mode shape, and a second optical mode having a second spatial mode shape, which apparatus comprises an optical path, mode transforming means, and propagating means, wherein the mode transforming means transforms at least a portion of the first optical mode to the second optical mode, the propagating means is configured such that in use at least some of the optical radiation propagates along the optical path more than once, and the apparatus is in that the first spatial mode shape is different from the second spatial mode shape.

The mode transforming means may be an integral feedback means and mode transformer. The mode transforming means may be a first grating.

The first grating may be characterised by a first coupling coefficient between the second mode incident upon the first grating and the second mode output by the first grating. The first grating may be characterised by a second coupling coefficient between the second mode incident upon the first grating and the first mode that is output by the first grating. The magnitude of the second coupling coefficient may be greater than the magnitude of the first coupling coefficient. The magnitude of the first coupling coefficient may be substantially zero. The magnitude of the second coupling coefficient may be uniform along the first grating. The magnitude of the second coupling coefficient may vary along the first grating.

The propagating means may be a reflector selected from the group comprising a grating, a dielectric surface, a mirror, a dichroic mirror, and a fibre Bragg grating.

The propagating means may be an integral feedback means and mode transformer.

The propagating means may be a second grating. The second grating may be characterised by a third coupling coefficient between the first mode incident upon the second grating and the first mode output by the second grating. The second grating may be characterised by a fourth coupling coefficient between the first mode incident upon the second grating and the second mode that is output by the second grating.
The magnitude of the fourth coupling coefficient may be greater than the magnitude of the third coupling coefficient. The third coupling coefficient may be substantially zero.

The magnitude of the fourth coupling coefficient may be uniform along the second grating. The magnitude of the fourth coupling coefficient may vary along the second grating.

The apparatus may comprise both the first grating and the second grating. The reflectivity of the first grating may be greater than the reflectivity of the second grating. The reflectivity of the first grating may be less than the reflectivity of the second grating. The reflectivity of the first grating may be the same as the reflectivity of the second grating. The first and second gratings may overlay.

The mode transforming means may be a long period grating.

The propagating means may be a reflector selected from the group comprising a grating, a dielectric surface, a mirror, a dichroic mirror, and a fibre Bragg grating.

The propagating means may be provided by a ring configuration.

The apparatus may include a waveguide comprising at least one cladding and at least one core. The apparatus may include stress-applying parts. The waveguide may be twisted along its length. The core may be circular. The core may be non-circular. Additionally or alternatively, the core may comprise a ring. The core may be offset from the centre of the waveguide.

The cladding may be circular. The cladding may be non-circular. The cladding may comprise at least one flat portion.

The first optical mode may be the fundamental mode of the waveguide. The waveguide may be a single mode waveguide.

The waveguide may comprise a gain medium. The gain medium may comprise at least one rare earth dopant selected from the group comprising Ytterbium, Erbium, Neodymium, Praseodymium, Thulium, Samarium, Holmium and Dysprosium. The gain medium may comprise a transition metal or semiconductor.

The waveguide may comprise a photosensitive region. The photosensitive region and the gain medium may be in different areas of the waveguide. At least a portion of the photosensitive region may overlap the gain medium.

The apparatus may include a source of pump radiation configured to pump the gain medium. The source of pump radiation may be a semiconductor laser.

The apparatus may be configured to emit optical radiation having an optical wavelength. This embodiment of the invention can be in the form of a laser. A plurality of these apparatus may be connected in series. Additionally or alternatively, a plurality of these apparatus may be connected in parallel. The optical wavelengths emitted by each of these apparatus may be unique. The apparatus may comprise a demultiplexer and a plurality of modulators, wherein the demultiplexer directs the optical radiation to the modulators, the optical radiation received by each modulator having a different wavelength.

The apparatus may include enhancing means for enhancing the interaction of the apparatus to a measurand. This embodiment of the invention can be in the form of a sensor. The enhancing means may comprise a coating. The enhancing means may comprise a mechanical lever or diaphragm. The measurand may be pressure, hydrostatic pressure, acoustic energy, seismic energy, acceleration, vibration, fluid flow, mechanical strain, temperature, magnetic field, electric current, or electric field. The apparatus may include readout instrumentation.

The apparatus may include an isolator.

The apparatus may be in the form of a passive cavity, a laser, an array of lasers, a single longitudinal mode laser, an array of single longitudinal mode lasers, a sensor, or a sensor array.

The apparatus may be in the form of a laser array, in which the laser array comprises a plurality of lasers and at least one signal coupler, in which the lasers are configured to emit laser radiation at unique wavelengths, and in which the signal coupler is configured such that coupling between lasers is below a threshold that induces temporal instability.

At least one laser may comprise a DFB fibre laser grating.

At least one laser may comprise a DBR laser comprising at least one Bragg grating.

The laser array may comprise a plurality of gratings written into a single mode rare-earth doped waveguide.

The apparatus may comprise a signal waveguide, in which the signal coupler is configured to couple the laser radiation into the signal waveguide.

The apparatus may comprise a pump waveguide and a pump coupler, in which the pump coupler is configured to couple pump radiation guided by the pump waveguide into the lasers.

The pump waveguide may be the signal waveguide.

The signal coupler may be a taper, a long-period grating, a blazed grating or a perturbation.

The pump coupler may be a taper, a long-period grating, or a blazed grating.

The grating that comprises the laser may also comprise the pump coupler and the signal coupler.

### Brief Description of the Drawings

Embodiments of the invention will now be described solely by way of example and with reference to the accompanying drawings in which:
Figure 1 shows an apparatus for propagating optical radiation according to the present invention;
Figure 2 shows an apparatus comprising first and second gratings, the apparatus being in the form of a laser,
Figure 3 shows an apparatus in which the first and second gratings overlay;
Figure 4 shows an apparatus comprising a plurality of lasers;
Figure 5 shows an apparatus comprising a sensing element;
Figure 6 shows an apparatus in which the propagating means is a reflector;
Figure 7 shows an apparatus comprising the first and second gratings, the apparatus being in the form of a passive cavity;
Figure 8 shows an apparatus in which the mode transforming means is a long period grating, the apparatus being in the form of a reflector;
Figure 9 shows an apparatus comprising a long-period grating, the apparatus being in the form of a ring cavity;
Figure 10 shows a waveguide comprising stress applying regions;
Figure 11 shows a waveguide comprising a first and a second cladding;
Figure 12 shows a waveguide comprising a core in the form of a ring;
Figure 13 shows a waveguide comprising a first and a second core;
Figure 14 shows a laser array according to the present invention;
Figure 15 shows a laser array in which the pump coupler is different from the signal coupler;
Figure 16 shows a laser array in which the grating serves as both the pump coupler and the pump coupler;
Figure 17 shows a laser array comprising a separate pump core;
Figure 18 shows a sensor system; and
Figure 19 shows a source for a communication system.

### Detailed Description of Preferred Embodiments of the Invention

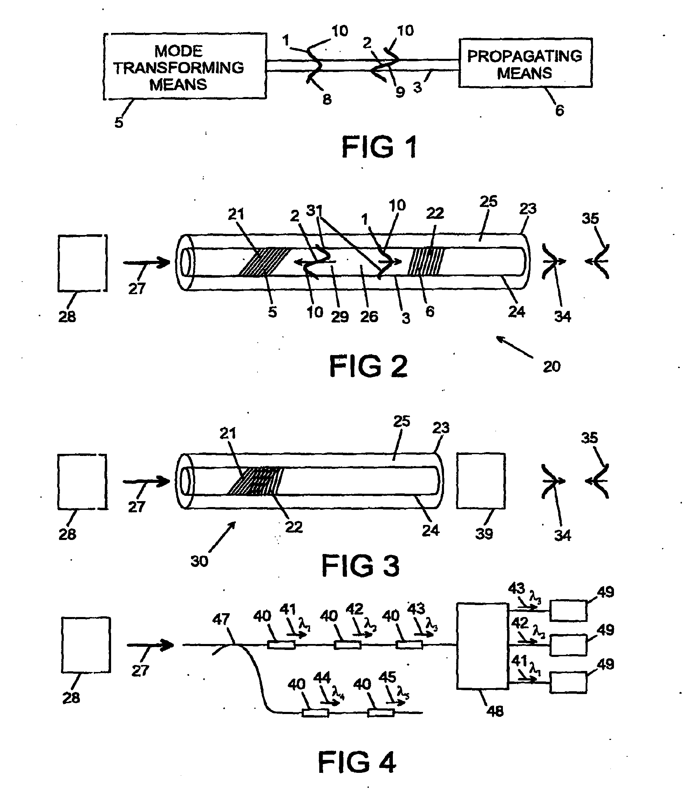

With reference to Figure 1, there is provided apparatus for propagating optical radiation 10 in a first optical mode 1 having a first spatial mode shape 8, and a second optical mode 2 having a second spatial mode shape 9, which apparatus comprises an optical path 3, mode transforming means 5, and propagating means 6, wherein the mode transforming means 5 transforms at least a portion of the first optical mode 1 to the second optical mode 2, the propagating means 5 is configured such that in use at least some of the optical radiation 10 propagates along the optical path 3 more than once, and the apparatus is characterised in that the first spatial mode shape 8 is different from the second spatial mode shape 9.

There is shown in Figure 2 apparatus in the form of a laser 20 in which the mode transforming means 5 is a first grating 21, and the propagating means 6 is a second grating 22. The first and second gratings 21, 22 are integral feedback means and mode transformers that feed back at least a portion of one mode back into the optical path 3 in the form of another mode having a different spatial mode shape. The laser 20 comprises a waveguide 23 comprising a core 24, a cladding 25 and a gain medium 26 that is pumped by pump radiation 27 from a pump 28. The waveguide 23 may be an optical fibre or a planar waveguide, and the gain medium 26 may comprise tare-earth dopant disposed in at least one of the core 24 and the cladding 25. The waveguide 23 may comprise a plurality of cores 24 and at least one of these cores 24 may contain rare earth doping. The gain medium 26 may comprise at least one rare earth dopant selected from the group comprising Ytterbium, Erbium, Neodymium, Praseodymium, Thulium, Samarium, Holmium and Dysprosium. The gain medium 26 may comprise a transition metal or semiconductor.

The first and second gratings 21, 22 have a reflectivity that can be defined as the proportion of power that is coupled between the first and the second optical modes 1, 2.

The first grating 21 can have a higher reflectivity than the second grating 22. For example, the reflectivity of the first grating 21 may be between 50% and 100%, and the reflectivity of the second grating 22 may be between 1% and 25%. The laser 20 will then emit laser radiation 34 more in one direction than the other and the laser 20 can be described as a unidirectional laser. The laser can be configured to emit laser radiation 34 in the other direction (ie towards the source 33) by having the reflectivity of the first grating 21 less than the reflectivity of the second grating 22. Alternatively, for bidirectional operation, the reflectivities of the first and second gratings 21, 22 should be approximately equal and in the range 1% to 100%, the exact figure being dependent upon the gain and round-trip loss within the cavity 29 defined by the first and second gratings 21, 22.

The first optical mode 1 is shown as being the fundamental mode of the waveguide 23, and the second optical mode 2 is shown as being one of the second modes of the waveguide 23. Alternatively, the first optical mode 1 can be an odd mode of the waveguide 23, and the second optical mode 2 can be an even mode of the wavegu ide 23 - or vice versa.

The laser 20 may support many longitudinal lasing modes (by having the length of the cavity 29 between around 5cm and 100cm) and many transverse lasing modes (by ensuring that the waveguide 23 is multimoded). The waveguide 23 can be a dual mode waveguide.

Preferably, the waveguide 23 is a single mode waveguide in which the round trip loss in the cavity 29 is less than the round trip gain. Thus although the second and higher-order modes will be leaky, the single mode waveguide can be designed such that their loss within the cavity 29 is sufficiently low so as to permit lasing. Higher order modes emitted by such a laser 20 will tend to leak away - for example in a single mode waveguide connected to the cavity 29 or in a subsequent single mode waveguide that may be connected to the laser 20. The laser 20 can then be considered to support only a single transverse mode. The laser 20 can be configured to oscillate in a single longitudinal mode by decreasing the separation of the first and second gratings 21, 22. The laser 20 will then be a single longitudinal mode laser.

The first and second gratings 21, 22 can overlay as shown in the apparatus of Figure 3 which is in the form of a laser 30. The length of the first and second gratings 21, 22 can be in the order of 5mm to 50mm. This is particularly advantageous for achieving single-longitudinal mode operation of the laser 30. The laser 30 is shown having an isolator 39 to prevent feedback into the laser 30. The isolator 30 is optional and its incorporation will depend upon how much feedback the laser 30 can tolerate without excess noise. Isolators may be used in any of the embodiments of the invention.

It is preferred in Figures 2 and 3 that the second grating 22 is configured such that the coupling coefficient between first optical mode 1 travelling from left to right and the first optical mode 1 travelling from right to left is substantially zero. Alternatively, or in addition, it is preferred that the first grating 21 is configured such that the coupling coefficient between the second optical mode 2 travelling from right to left and the second optical mode 2 travelling from left to right is substantially zero. This is achieved by angling the first and second gratings 21, 22 (as shown) until the desired reflectivities and coupling coefficients are achieved. An advantage of such an arrangement is that it will promote the desired lasing mode 31 comprising a first optical mode 1 travelling from left to right and a second optical mode 2 travelling from right to left. This is particularly advantageous if the waveguide 23 is single moded at the wavelength of the laser radiation 34 because the laser will tend to prefer to oscillate as shown - ie with the fundamental mode travelling from left to right, and the (leaky) second mode travelling from right to left. The laser radiation 34 will then be substantially single moded and any unwanted second mode emission will be attenuated by the waveguide 23. Reflections 35 back into the laser 20 will be predominately single moded (as shown) and these reflections will have the wrong symmetry to interfere strongly with the desired laser mode 31. The lasers 20, 30 have relative immunity from back reflections compared to prior art lasers thus reducing the need for an isolator at the output. Isolators are expensive components, and thus the lasers 20, 30 have significant cost advantages.

There is shown in Figure 4 apparatus in which a plurality of lasers 40 are connected in series and in parallel via a coupler 47. The lasers 40 are preferably the lasers 20 and/or 30. The lasers 40 can share a common pump source 28, or different pump sourem. Preferably the lasers 40 each emit optical radiation 41-45 at unique wavelengths. The optical radiation 41-43 is shown being demultiplexed by a demultiplexer 48 and modulated by modulators 49. The demultiplexer 48 can be an add-drop multiplexer, one or more couplers, beam splitters, or can comprise a demultiplexer comprising at least one of an arrayed waveguide grating, thin film filters and fibre Bragg gratings. The modulator 49 can comprise a lithium niobate integrated optic modulator, an acousto-optic modulator, an electro-optic modulator or any other form of optical modulator. The apparatus has application in communication systems, and in sensor systems for interrogating sensor arrays.

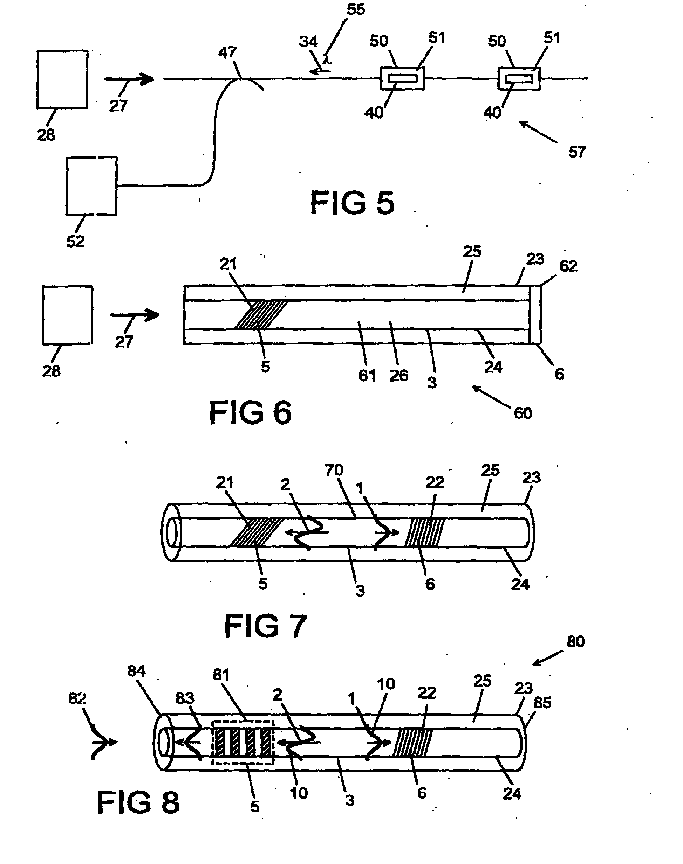

Figure 5 shows apparatus in the form of a sensor 57. The sensor 57 includes at least one sensing element 50 comprising the laser 40 and an enhancing means 51 that enhances the interaction of the sensing element 50 to a measurand. The enhancing means 51 converts a measurand such as pressure, hydrostatic pressure, acoustic energy, seismic energy, acceleration, vibration, fluid flow, mechanical strain, temperature, magnetic field, electric current, or electric field into a change in the instantaneous wavelength λ. 55 of the laser emission 34. The enhancing means 51 may comprise a coating such as an acrylale, silicone rubber or a polymer. Alternatively or in addition, the enhancing means 51 may comprise an actuator, a mechanical device such as a lever or a diaphragm. There are many examples of fibre-laser and fibre grating-based sensors in the literature. Some examples are provided in United States Patents US6422084, US5564832, US5488475, US6229827, US5844927, which are hereby incorporated herein by reference.

The laser emission 34 is directed to read-out instrumentation 52 via a coupler 47. The read-out instrumentation 52 may comprise an instrument for measuring the wavelength λ 55 of the laser 40. Alternatively, the read-out instrumentation 52 may comprise a phase or frequency demodulator such as found in radio receivers for demodulating phase or frequency modulated signals.

The sensor 57 can be configured as a hydrophone, an accelerometer, a geophone, an acoustic sensor, a flow sensor, a strain sensor, a temperature sensor, a pressure sensor, a magnetic field sensor, an electric current sensor, or an electric field sensor.

The apparatus shown in Figure 5 may comprise a single sensing element 50, or may be in the form of a sensor array that comprises a plurality of sensing elements 50. Preferably the laser emission 34 from each sensing element 50 would be separately identifiable, for example utilizing the time domain, and/or by configuring the sensing array such that some or all of the sensing elements 50 emit at unique wavelengths 55. The sensor array has the advantage over the prior art in that the individual lasers can be made relatively immune to reflections.

There is shown in Figure 6 apparatus in the form of a laser 60 in which the propagating means 6 is a reflector 62. The reflector 62 may be a grating, a dielectric surface, a mirror, a dichroic mirror, or a fibre Bragg grating. The first grating 21 and the reflector 62 define a cavity 61. The cavity 61 comprises the gain medium 26.

There is shown in Figure 7 apparatus in the form of a cavity 70 comprising the first and second gratings 21, 22. The cavity 70 can be used as an interferometric cavity and is in the form of a passive cavity. Passive cavities can also be formed in the apparatus shown in Figures 2, 3 and 6 by removing the gain medium 26, or by operating the apparatus in a wavelength range at which there is no gain.

Referring to Figure 1, the mode transforming means 5 can be a mode transformer. An example is shown in Figure 8 in which is shown apparatus in the form of a filter 80 in which the mode transforming means 5 is a long-period grating 81 that converts the second mode 2 travelling from right to left into a first mode 83 travelling from right to left. The second grating 22 can be configured at an angle such that the coupling coefficient between the first mode 1 incident upon the second grating 22 and the first mode 1 reflected by the second grating 22 is zero. This embodiment is useful for reflecting at least a portion of light 82 that is input into the filter 80 at its first end 84 in the form of the first mode 1. Light input from the second end 85 will be reflected as the second mode 2 which can be made to leak away by suitable choice of the second-mode cut-off wavelength of the fibre 23. The Siter 80 is useful in applications in which a filter is required to only reflect a fundamental mode in one direction.

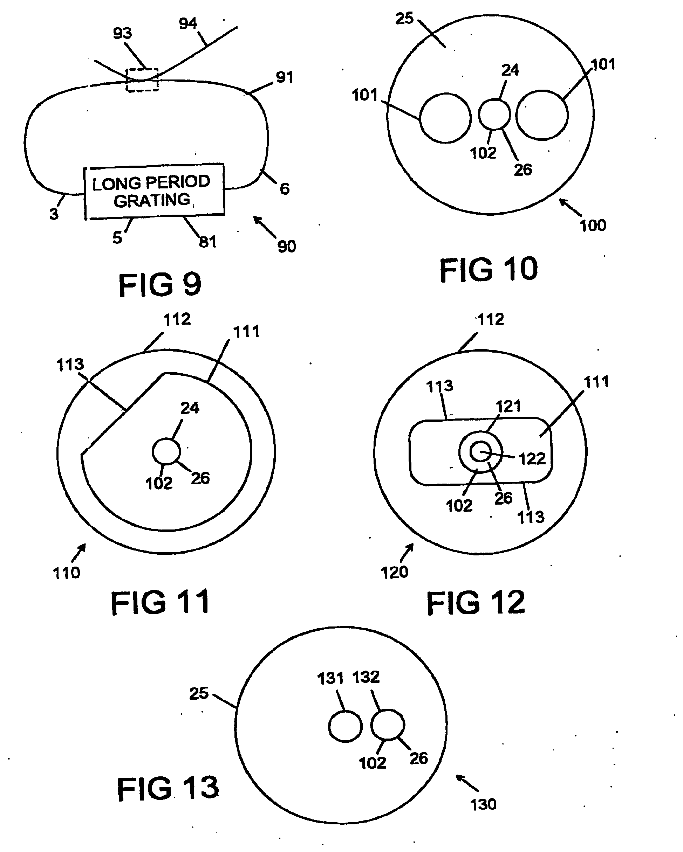

There is shown in Figure 9 apparatus in the form of a ring cavity 90 comprising the long period grating 81. The propagating means 6 is a feedback means comprising a length of fibre 91 that feeds back optical radiation to the optical path 3. Light will travel around the ring cavity 90 in the first optical mode 1 and the second optical mode 2 alternatively. Light can be injected into the cavity 90 via the coupler 93. The fibre 91 can be a dual mode fibre containing rare-earth dopant that can be pumped via the coupler 93. The ring cavity 90 is then in the form of a ring laser. Light can be output from the ring laser at the output port 94.

Several of the embodiments of the invention (for example Figure 2, 3, 6, 7 and 8) utilize an angled grating in order to control the relative coupling between the first and second modes of the waveguide 23.

Referring to Figures 2, 3, 6 and 7, the first grating 21 is characterised by a first coupling coefficient C₂₂ between the second mode 2 incident upon the first grating 21 and the second mode 2 output by the first grating 21. The first grating 21 is also characterised by a second coupling coefficient C₂₁ between the second mode 2 incident upon the first grating 21 and the first mode 1 that is output by the first grating 21. The magnitude of the second coupling coefficient C₂₁ may be greater than the magnitude of the fast coupling coefficient C₂₂. The magnitude of the first coupling coefficient C₂₂ may be substantially zero. The magnitude of the second coupling coefficient C₂₁ may be uniform along the first grating 21. The magnitude of the second coupling coefficient C₂₁ may vary along the first grating 21.

Referring to Figures 2, 3, 7 and 8, the second grating 22 is characterised by a third coupling coefficient C₁₁ between the first mode 1 incident upon the second grating 22 and the first mode 1 output by the second grating 22. The second grating 22 is also characterised by a fourth coupling coefficient C₁₂ between the first mode 1 incident upon the second grating 22 and the second mode 2 that is output by the second grating 22. The magnitude of the fourth coupling coefficient C₁₂ may be greater than the magnitude of the third coupling coefficient C₁₁. The third coupling coefficient C₁₁ may be substantially zero. The magnitude of the fourth coupling coefficient C₁₂ may be uniform along the second grating 22. The magnitude of the fourth coupling coefficient C₁₂ may vary along the second grating 22.

The coupling coefficient between two modes of a waveguide can be calculated by coupled mode theory. The coupling coefficient is proportional to the product of the fields of the two modes and the perturbation of the refractive index, integrated over the perturbation. In this case, the grating defines a perturbation of the refractive index. The coupling coefficient is thus a function of the angle of the grating. An analysis of the properties of angled gratings in planar waveguides can be found in Riziotis and Zervas, Journal of Lightwave Technology, Vol 19, No 1, January 2001, pages 92-104. This reference also contains an extensive bibliography.

Referring to Figures 2, 3, 6, 7 and 8, the waveguide 23 may be a planar waveguide or an optical fibre waveguide. The optical fibre waveguide may include stress-allying parts 101 as shown in the optical fibre 100 of Figure 10. The stress-applying parts 101 are designed to induce birefringence. Alternatively, or in addition, the waveguide 23 may be twisted along its length. The optical fibre 100 may include a gain medium 26, and may include a photosensitive region 102. Alternatively, or in addition, the waveguide 23 of the laser 30 may be twisted along its length. Stress applying parts 101 and/or twisting the waveguide 23 is desirable in a single-transverse mode laser that includes one or more fibre Bragg gratings because they assist in promoting single-polarisation operation. Preferably, the laser 30 will include the stress applying parts 101, the first and second gratings 21, 22 will be between 5mm and 50mm long, and the laser 30 will be in the form of a single transverse mode, single polarisation, single longitudinal mode laser.

Figure 11 shows a waveguide 110 comprising a core 24, first cladding 111, and second cladding 112. The refractive index of the core 24 is greater that the refractive index of the first cladding 111, which is greater than the refractive index of the second cladding 112. The core 24 and first cladding 111 may be made from silica glasses. The second cladding 112 may be a polymer. The first cladding 111 includes a flat portion 113. The waveguide 110 is particularly useful for cladding pumping.

Figure 12 shows a waveguide 120 in which the first cladding 111 has a plurality of flat portions 113. The waveguide 120 has a core 121 in the form of a ring that surrounds an area 122 of the waveguide 120. The area 122 can have a refractive index less than the core 121. The core 121 can be circular or non-circular. Ring doping can be used to increase the area of the first and second modes 1, 2. The area 122 can be centrally located within the waveguide 120, or offset from the centre.

Figure 13 shows a waveguide 130 having two cores 131,132. One or both of the cores 131, 132 may contain the gain medium 26. Either or both of the cores 131, 132 may contain the photosensitive region 102. Alternatively, or in addition, the gain medium 26 and/or the photosensitive region 102 may be in the cladding 25. If used in the laser 20 or laser 30, the first and second gratings 21,22 can be used to couple energy between the first and second cores 131, 132. It is preferred that the first core 131 is centrally located (as shown) and that the first core 131 does not include the gain medium 26. The first core 131 can then be used for transmission of pump radiation 27 and for the transmission of laser radiation 34. This embodiment is particularly advantageous for sensor arrays. Design examples of angled gratings coupling energy between two cores in a waveguide can be found in Riziotis and Zervas, Journal of Lightwave Technology, Vol 19, No 1, January 2001, pages 92-104.

Figures 10 to 13 and their accompanying figure descriptions detail various design features, such as stress applying parts, multiple claddings, multiple cores, circular cores, and cores shaped in the form of a ring. Waveguides may be fabricated using one or more of these design features in any combination. For example, it may be desirable to cladding pump a fibre having a plurality of cores. Such a fibre would then comprise the first cladding 111, the second cladding 112, the first core 131 and the second core 132. Alternatively or additionally, the fibre may include the stress applying parts 101. The cores 24, 131, 132 may be circular or non-circular.

In order to fabricate the first and second gratings 21, 22 described with reference to the preceding figures, the waveguide 23 preferably comprises a photosensitive region 102 as shown with reference to Figures 10 to 13. Silica can be made photosensitive by doping with germanium, tin or antimony. Germanium-doped silica can be codoped with boron in order to modify its refractive index and/or to increase its photosensitivity.

The waveguide 23, 100, 110, 120 or 130 can be hydrogenated with hydrogen and/or deuterium prior to writing the grating. If the waveguide 23, 100, 110, 120 or 130 also includes a gain medium 26, then it may be preferable to separate the disposition of the gain medium 26 and the photosensitive region 102. This is advantageous if the gain medium 26 comprises erbium codoped with Ytterbium as described in United States Patent US 5,771,251 which is herby incorporated herein by reference. Ring doping of the gain medium 26 can also be used to improve the efficiency or to control the gain of a fibre laser, as is described in United States Patent US 6,288,835 B1, which is hereby incorporated herein by reference. Alternatively, the photosensitive region 102 may overlap the gain medium 26, either completely or partially.

Several different techniques can be used to fabricate the gratings described in the preceding embodiments. A preferred technique is to write the grating through a phase mask placed at an angle to the waveguide 23, 100, 110, 120 or 130. The gratings shown in Figure 3 would require overwriting of one grating by the other grating.

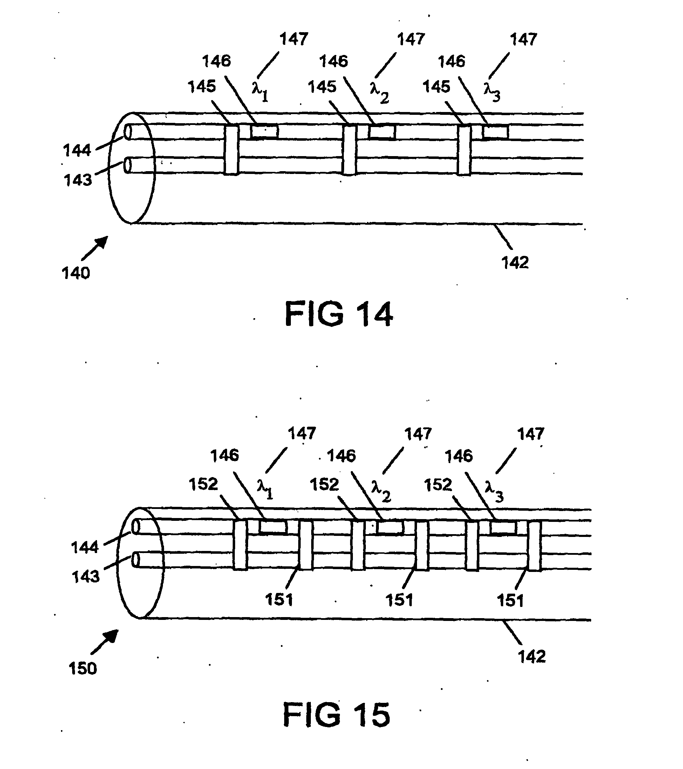

Figure 14 shows apparatus in the form of a laser array 140 comprising a plurality of lasers 146 and at least one signal coupler 145, in which the lasers 146 are configured to emit laser radiation at unique wavelengths 147, and the signal coupler 145 is configured such that coupling between lasers 146 is below a threshold that induces temporal instability.

The laser array 140 may be spliced to another laser array and time division multiplexing techniques used to separate out signals having the same wavelengths.

The laser array 140 shown in Figure 14 comprises an optical fibre 142 in which there is a signal waveguide 143 and a rare-earth doped waveguide 144. Each laser 146 can comprise a DFB fibre laser grating that is written into the rare-earth doped waveguide 144. Alternatively, some or all of the lasers 146 can comprise DBR lasers comprising at least one Bragg grating.

The laser array 140 is shown fabricated in a single optical fibre 142. Alternatively, the signal waveguide 143 and the rare-earth doped waveguide 144 can be fabricated in separate fibres, and the signal coupler 145 can be a fused taper coupler, or any other form of coupler. The two fibres can also be coated in the same coating and brought together to form couplers at various intervals along the fibre.

Each signal coupler 145 couples laser radiation emitted from the respective laser 146 into the signal waveguide 143.

In the embodiment shown in Figure 14, the signal waveguide 143 also serves as a pump waveguide, and the signal coupler also serves as a pump coupler, coupling pump radiation from the pump waveguide 143 into the rare-earth doped waveguide 144. Although the signal and pump waveguides are shown combined in Figure 14, this is not necessary, and a separate pump waveguide, which may be multimoded can be provided. Alternatively, a separate means can be provided for pumping each of the laser s 146 such as supplying each laser 146 with its own source of pump radiation.

Figure 15 shows a laser array 150 comprising a plurality of pump couplers 152 and a plurality of signal couplers 151.

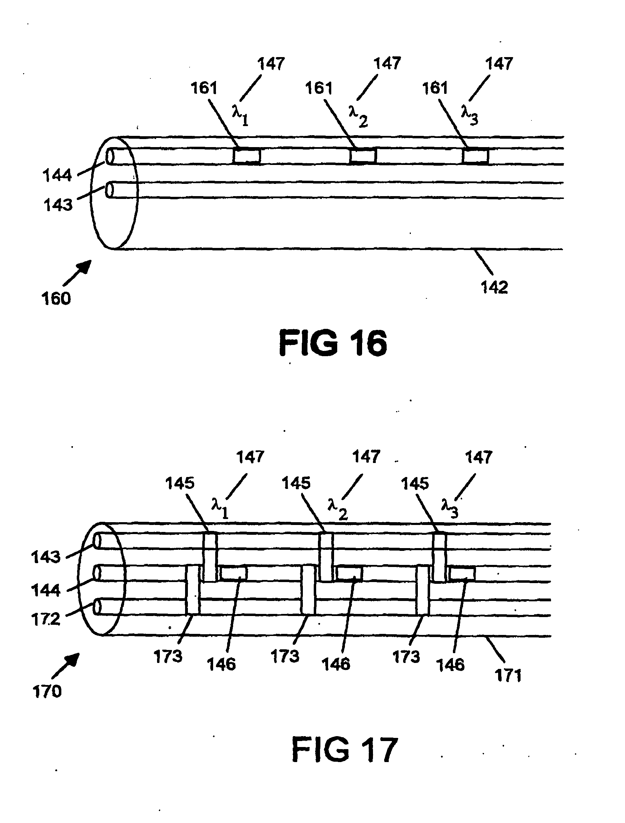

Figure 16 shows a laser array 160 comprising a plurality of gratings 161 that serve as the lasers, the pump couplers and the signal couplers.

The rare earth doped waveguide 144 comprises rare earth dopant. The rare earth dopant may be erbium, erbium co-doped with ytterbium, ytterbium, or another rare earth dopant The rare earth doped waveguide 144 is preferably doped with germanium to increase its photosensitivity. Other dopants such as tin and antimony can also be used to induce photosensitivity. If the waveguide 144 is doped with erbium co-doped with ytterbium, then it is preferable to separate at least a portion of the waveguide containing the rare earth dopant from the germanium dopant.

If the waveguide 144 contains erbium doping, or erbium co-doped with ytterbium, then the pump wavelength can contain radiation having at least one wavelength in the wavelength ranges used to pump such lasers, i.e. for erbium/ytterbium from around 915nm to 980nm and around 1450 to 1480nm.

If the waveguide 144 contains erbium, then the laser 146 can be configured to operate in the L-band, and the pump radiation can contain at least one wavelength in the wavelength ranges that are used to pump L-band amplifiers, i.e. wavelengths of around 1450 to 1480 and around 1530 to 1540nm. This is advantageous because pump radiation at high powers (1W to 100W or higher) can be transmitted over long distances (1km to 100km) at these pump wavelengths.

Transmitting multiple pump wavelengths can be advantageous as different ones of the lasers 146 can be pumped by different pump wavelengths.

In Figure 14, the signal coupler 145 can be a taper, a long period grating, a blazed grating or any other form of perturbation such as evanescent field coupling that couples optical radiation from the signal waveguide 143 into the rare-earth doped waveguide 144. The signal waveguide 143 and the rare-earth doped waveguide 144 are preferably dissimilar waveguides, that is at least one of their radii and numerical apertures should be different so that the propagation constants of optical radiation propagating along the waveguides 143,144 at the signal wavelength are different from each other.

If the signal coupler 145 is a taper, then it may be preferable that the signal waveguide 143 and the rare-earth doped waveguide 144 are configured such that the propagation constants of optical radiation propagating along the waveguides 143, 144 are substantially similar within the signal coupler 145.

The signal coupler 145 can also be post processed for example by the applical ion of ultra violet irradiation in order to tune the coupling between the wavegu ides 143, 144. The ability to tune the coupling ratio, for example by irradiation through the coating, is particularly advantageous for improving manufacturing yield or for reworking or repair.

The signal waveguide 143 is preferably concentric with the optical fibre 142, thus facilitating fusion splicing between a down lead connecting instrumentation with the optical fibre 142.

The optical fibre 142 may be fabricated by drilling a standard single mode preform and inserting a suitably designed rare-earth doped preform rod alongside the core of the standard single mode preform.

If the signal waveguide 143 also serves as a pump waveguide, then it is preferable that the coupling ratio at the pump wavelength is configured such that each of the lasers 146 receives adequate pump radiation in order for the laser to emit laser radiation. The coupling ratio at the pump wavelength may be between 1 % and 100%. Preferably the coupling ratio increases along the laser array 140, and it is preferable that the coupling ratio is between 50% and 100% for the last laser 146 in the may 140, and between 1% and 25% for the first laser 146 in the array 140.

The signal coupler 145 should be configured to reduce cross-coupling between the lasers 146. If a taper is utilized, then laser radiation coupled from the signal waveguide 143 into the rare-earth doped waveguide 144 can be advantageously absorbed by the rare earth dopant between the lasers 146. The coupling ratio of the signal coupler 145 at the signal wavelength 147 is advantageously arranged to be small, say from 1% to 50%, or even 0.5% to 10% in order to reduce the loss of signal from the signal waveguide 143 into the rare-earth doped waveguide 144:

The signal coupler 145 can either comprise a single coupler, or multiple couplers arranged such that the desired coupling ratios at the pump wavelength and the signal wavelengths are achieved. The multiple couplers can be separate or combined, for example a superstructure long-period grating in which two long-period gratings are overwritten.

In Figure 15, the pump coupler 152 can operate in a similar manner to the signal coupler of Figure 14 at the pump wavelength. However, it is advantageous if the pump coupler 152 does not couple significant power at the signal wavelengths.

The signal coupler 151 is preferably a blazed grating that reflects the laser radiation at the signal wavelength and couples the laser radiation between the rare-earth doped waveguide 144 and the signal waveguide 143. The advantage of using a blazed grating configured to reflect and couple the optical radiation is that it can have a narrower wavelength bandwidth than a long-period grating or a taper, thus reducing reflection for adjacent wavelengths. Unwanted reflections at other signal wavelengths will result in energy coupled from the signal waveguide 143 into the rare earth doped waveguide 144, whereupon such energy will be absorbed by the rare earth doped waveguide 144. The coupling ratio of the signal coupler 151 at the signal wavelength can be 1% to 100%. Preferably the coupling ratio is between 50% and 90%.

Referring to Figure 16, the grating 161 can be a DFB fibre grating that also serves to couple pump radiation from the signal waveguide 163 and which couples some of the laser radiation into the signal waveguide 163. A DFB fibre grating of this type has been described in the literature.

Figure 17 shows a laser array 40 comprising an optical fibre 171, which contains a separate pump waveguide 172 and pump couplers 173. The pump coupler 173 couples pump radiation from the pump waveguide 172 into the rare-earth doped waveguide 174. The pump coupler 173 and the signal coupler 145 may be overlapping and may be formed simultaneously, for example by tapering the optical' fibre 171, or by writing a long-period grating or blazed grating. The pump waveguide 172 may be multimoded. Similar design considerations apply to the laser array 170 as those that were described with reference to the laser array 140 of Figure 14. The signal waveguide 143 can be located concentrically with the fibre 171, and the rare-earth doped waveguide 144 and the pump waveguide 172 can be configured in various cross-sectional arrangements.

The schemes shown in Figures 14 to 17 have several features that are in common:
- The rare earth doped waveguide 144 is utilized both as a gain medium that is utilized to form the lasers 146, as well as an absorber to absorb laser radiation that is either not coupled into the signal waveguide 143, or is coupled from the signal waveguide 143 into the rare earth doped waveguide 144. This has the advantageous feature of reducing the relative energy coupled between the lasers 146.
- The pump couplers 152, 145,161, 173 are arranged such that pump radiation is distributed to each of the lasers 146, for example by arranging that the coupling ratio for the first lasers in the array is small.
- The signal couplers 145, 151, 161 are configured to reduce cross coupling of signal radiation between lasers 146, for example by lowering the coupling ratio at the signal wavelengths 147, and/or by ensuring that a narrowband grating is used.
- Reduction in the cross-coupling of laser radiation between the lasers 146 will result in much a larger number of lasers 146 that can be combined together in an array without the cross-coupled power reaching a threshold causing the temporal instability that has been so problematic for DFB and DBR fibre laser arrays.
- The laser arrays 140, 150, 160, 170 do not require splices between dissimilar fibres along their length. This has advantages associated with the strength of the array, as well as offering savings in cost. Advantageously, it also means that fibre coatings do not need to be removed in order make the splices, and therefore offers the potential of fabricating the array by writing gratings through the fibre coating. The resulting array would therefore have intrinsic cost and strength advantages.
- The signal waveguide 143 is preferably concentric with the fibre 142, 171. This has the advantage that it can be readily spliced to down leads separating the array from instrumentation.

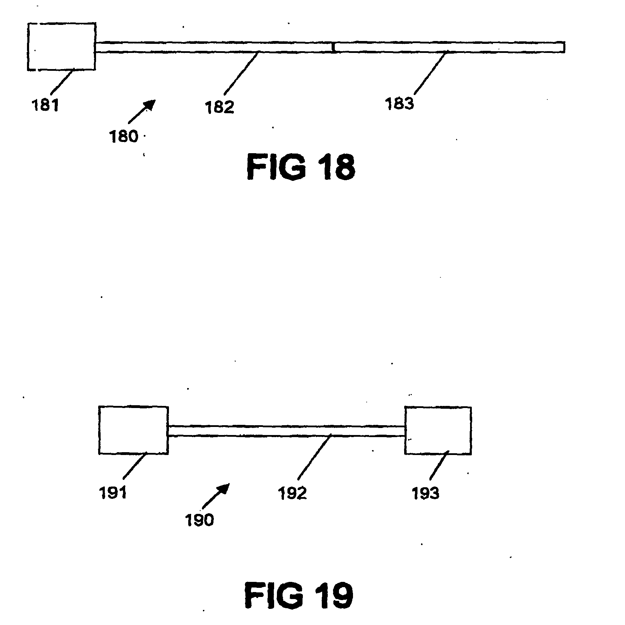

Figure 18 shows a sensor system 180 comprising instrumentation 181, a down lead 182 and a laser array 183. The laser array 183 may comprise at least one of the laser arrays 140, 150, 160,170, or another laser array according to the present invention. The instrumentation 181 may comprise at least one pump source for pumping the laser array 183 and read out electronics for making a measurement. The read out electronics may comprise a wavelength meter for measuring the shift in wavelength induced by an external parameter such as temperature or pressure, or may comprise an interferometer and demodulation electronics for measuring variations in signal wavelength such as are induced by acoustic signals. The sensor system 180 may be a seismic array, an acoustic array, an array comprising vibrometers or geophones, or an array of temperature and/or pressure sensors.

Figure 19 shows a source 190 for a communication system comprising at least one pump 191, a laser array 192, and modulators 193. The modulators 193 preferably comprise a wavelength division demultiplexer that separate out the signal wavelengths and direct them to individual modulators such as Lithium Niobate modulators. The modulated signals can then be multiplexed back together again.
The embodiment shown in Figure 19 is advantageous because of the reduced component count, in particular with reference to the number of isolators that are normally required with such a source 190. And in particular, the embodiment is useful when there is only one laser in the apparatus emitting at a single wavelength because of the potential for reduced component count.

It is to be appreciated that the embodiments of the invention described above with reference to the accompanying drawings have been given by way of example only and that modifications and additional components may be provided to enhance performance. In addition, the invention can be considered to be a passive cavity, a laser, an array of lasers, a single longitudinal mode laser, an array of single longitudinal mode lasers, a sensor, a sensor array or a source for a communication system.

The present invention extends to the above-mentioned features taken in isolation or in any combination. Thus, for example, the present invention may provide as a separate invention apparatus having just the features specifically recited in Claim 54, i:e. without the features of Claims 1 - 53, In this case, the apparatus may then include the features specifically recited in Claims 55 - 60.

## Claims

1. Apparatus for propagating optical radiation in a first optical mode having a first spatial mode shape, and a second optical mode having a second spatial mode shape, which apparatus comprises an optical path, mode transforming means, and propagating means, wherein the mode transforming means transforms at least a portion of the first optical mode to the second optical mode, the propagating means is configured such that in use at least some of the optical radiation propagates along the optical path more than once, and the apparatus is **characterised in that** the first spatial mode shape is different from the second spatial mode shape.

2. Apparatus according to claim 1 wherein the mode transforming means is an integral feedback means and mode transformer.

3. Apparatus according to claim 2 wherein the mode transforming means is a first grating.

4. Apparatus according to claim 3 wherein the first grating is **characterised by** a first coupling coefficient between the second mode incident upon the first grating and the second mode output by the first grating, and a second coupling coefficient between the second mode incident upon the first grating and the first mode that is output by the first grating, and wherein the magnitude of the second coupling coefficient is greater than the magnitude of the first coupling coefficient.

5. Apparatus according to claim 4 wherein the magnitude of the second coupling coefficient varies along the first grating.

6. Apparatus according to any one of the preceding claims wherein the propagating means is a reflector selected from the group comprising a grating, a dielectric surface, a mirror, a dichroic mirror, and a fibre Bragg grating.

7. Apparatus according to any one of claims 3 to 6 wherein the propagating means is an integral feedback means and mode transformer.

8. Apparatus according to claim 7 wherein the propagating means is a second grating.

9. Apparatus according to claim 8 wherein the second grating is **characterised by** a third coupling coefficient between the first mode incident upon the second grating and the first mode output by the second grating, and a fourth coupling coefficient between the first mode incident upon the second grating and the second mode that is output by the second grating, and wherein the magnitude of the fourth coupling coefficient is greater than the magnitude of the third coupling coefficient.

10. Apparatus according to claim 9 wherein the magnitude of the fourth coupling coefficient varies along the second grating.

11. Apparatus according to any one of claims 8 to 10 wherein the first and second gratings overlay.

12. Apparatus according to claim 1 wherein the mode transforming means is a long period grating.

13. Apparatus according to claim 12 wherein the propagating means is a reflector selected from the group comprising a grating, a dielectric surface, a mirror, a dichroic mirror, and a fibre Bragg grating.

14. Apparatus according to any one of claims to 5 or claim 12 wherein the propagating means is provided by a ring configuration.

15. Apparatus according to any one of the preceding claims and including a waveguide comprising at least one cladding and at least one core.

16. Apparatus according to claim 15 and including stress applying parts.

17. Apparatus according to claim 15 or 16 wherein the waveguide is twisted.

18. Apparatus according to any one of claims 15 to 17 wherein the core is circular.

19. Apparatus according to any one of claims 15 to 18 wherein the waveguide comprises a gain medium, and wherein the gain medium comprises at least one rare earth dopant selected from the group comprising Ytterbium, Erbium, Neodymium, Praseodymium, Thulium, Samarium, Holmium and Dysprosium.

20. Apparatus according to any one of claims 15 to 19 wherein the waveguide comprises a photosensitive region.

21. Apparatus according to claim 20 wherein the photosensitive region and the gain medium are in different areas of the waveguide.

22. Apparatus according to any one of claims 19 to 21 and including a source of pump radiation configured to pump the gain medium.

23. Apparatus according to any one of claims 19 to 22 and configured to emit optical radiation having an optical wavelength.

24. Apparatus comprising a plurality of the apparatus according to claim 23 connected in series.

25. Apparatus comprising a plurality of the apparatus according to claim 23 connected in parallel.

26. Apparatus according to claim 24 or claim 25 wherein the optical wavelengths emitted by each of the apparatus according to claim 23 are unique.

27. Apparatus according to any one of claims 24 to 26 and comprising a demultiplexer and a plurality of modulators, wherein the demultiplexer directs the optical radiation to the modulators, the optical radiation received by each modulator having a different wavelength.

28. Apparatus according to any one of the preceding claims and including enhancing means for enhancing the interaction of the apparatus to a measurand.

29. Apparatus according to claim 28 wherein the enhancing means comprises a coating, a mechanical lever, or diaphragm.

30. Apparatus according to any one of claims 28 to 29 wherein the measurand is pressure, hydrostatic pressure, acoustic energy, seismic energy, acceleration, vibration, fluid flow, mechanical strain, temperature, magnetic field, electric current, or electric field.

31. Apparatus according to any one of the preceding claims and in the form of a passive cavity, a laser, an array of lasers, a single longitudinal mode laser, an array of single longitudinal mode lasers, a sensor, or a sensor array.

32. Apparatus according to claim 31 which is in the form of the laser array, in which the laser array comprises a plurality of lasers and at least one signal coupler, in which the lasers are configured to emit laser radiation at unique wavelengths, and in which the signal coupler is configured such that coupling between lasers is below a threshold that induces temporal instability.

33. Apparatus according to claim 32 in which at least one laser comprises a DFB fibre laser grating.

34. Apparatus according to claim 32 or claim 33 in which at least one laser comprises a DBR laser comprising at least one Bragg grating.

35. Apparatus according to any one of claims 32 to 34 in which the laser array comprises a plurality of gratings written into a single mode rare-earth doped waveguide.

36. Apparatus according to any one of claims 32 to 35 and comprising a signal waveguide, and in which the signal coupler is configured to couple the laser radiation into the signal waveguide.

37. Apparatus according to any one of claims 32 to 36 and comprising a pump waveguide and a pump coupler, and in which the pump coupler is configured to couple pump radiation guided by the pump waveguide into the lasers.

38. Apparatus according to claim 37 in which the pump waveguide is the signal waveguide.

39. Apparatus according to claim 38 in which the grating that comprises the laser also comprises the pump coupler and the signal coupler.
